# EUROPÄISCHE PATENTSCHRIFT

(11) **EP 0 844 988 B1**
(45) Veröffentlichungstag und Bekanntmachung des Hinweises auf die Patenterteilung: **24.03.1999**
(21) Anmeldenummer: 96933316.0
(22) Anmeldetag: 13.08.1996
(51) Int. Cl.: C04B 33/10

(54) **VERFAHREN ZUR HERSTELLUNG AUFGEHELLTER MINERALIEN**
PROCESS FOR PRODUCING BRIGHTENED MINERALS
PROCEDE DE PRODUCTION DE MINERAUX ECLAIRCIS

(30) Priorität: 16.08.1995 DE 19530062
(43) Veröffentlichungstag der Anmeldung: 03.06.1998
(73) Patentinhaber: Gebrüder Dorfner GmbH & Co. Kaolin- und Kristallquarzsandwerke KG, 92242 Hirschau (DE)
(72) Erfinder: FORKEL, Günter, D-92421 Schwandorf (DE); GASSENHUBER, Rudolf, D-92224 Amberg (DE)
(74) Vertreter: LOUIS, PÖHLAU, LOHRENTZ & SEGETH
(86) Internationale Anmeldenummer: DE9601535
(87) Internationale Veröffentlichungsnummer: WO9707076

(56) Entgegenhaltungen:
- EP-A- 0 131 785
- DE-B- 1 646 565
- GB-A- 2 018 733
- US-A- 4 097 372
- US-A- 4 186 027
- US-A- 5 342 443

## Beschreibung

Die vorliegende Erfindung betrifft ein Verfahren zur Herstellung aufgehellter Mineralien, insbesondere ein Verfahren zur Herstellung von aufgehellten Schichtsilikaten, und Carbonaten.

Schichtsilicate, wie Kaoline und Talkum, sowie Carbonate werden insbesondere im Bereich Papier, als Füllstoff und Streichpigment und insbesondere Kaolin in der Keramik als weißbrennendes Mineral in der Masse und in der Glasur eingesetzt. Die hierfür verwendeten Mineralien kommen in der Natur aufgrund der vorhandenen Beimengungen in unterschiedlichen Qualitäten vor, die sich stark in ihrem Weißgrad unterscheiden. Der Weißgrad ist dabei für die vorgesehenen Verwendungen von herausragender Bedeutung. Es sind daher Bleichverfahren entwickelt worden, um hinsichtlich des Weißgrades Rohstoffe aus qualitativ minderwertigeren Mineralvorkommen aufzuhellen und dadurch für Anwendungen mit höheren Qualitätsanforderungen zugänglich zu machen.

Bei diesen Bleichverfahren handelt es sich um eine im sauren, neutralen als auch im alkalischen Medium durchgeführte reduzierende Bleiche mit Natriumdithionit oder FAS (Formamidinsulfinsäure), eine Hochgradientmagnetscheidung bei Feldstärken von 0,2 bis 5 Tesla, bei dem färbende, magnetische Metalloxide und andere Metallverbindungen abgetrennt werden können, eine reduzierende Bleiche in Kombination mit einer Hochgradientmagnetscheidung, und um eine oxidierende Bleiche mit Wasserstoffperoxid und Ozon, wobei letzteres wirtschaftlich von untergeordneter Bedeutung ist. Ein entsprechendes Verfahren ist aus US-A-5 342 443 bekannt.

Das derzeit effizienteste Verfahren ist die kombinierte chemische Bleiche mit Reduktionsmitteln wie Natriumdithionit oder FAS vor oder nach einer Hochgradientenmagnetscheidung. Dabei wird eine Kaolinsuspension mit einem Feststoffgehalt von 200 bis 600 g/l mit Dispergiermitteln versetzt und unter starkem Rühren alkalisch mit Natronlauge und Polyacrylat dispergiert. Die Schichtsilikatagglomerate werden dadurch delaminiert, und die dispergierte Suspension wird anschließend durch ein mit Stahlwolle dicht gepacktes Magnetfeld gepumpt. An den Stahlwolledrähten scheiden sich dabei die magnetischen, färbenden Metalloxide und andere Metallverbindungen aus der Schichtsilicatsuspension ab. Die hierbei verwendete Magnetfeldstärke beträgt zwischen 0,2 und 5 Tesla und es findet eine Aufhellung der behandelten Schichtsilikate in Richtung eines höheren Weißgrades statt.

Diese bekannten Verfahren weisen allerdings den Nachteil auf, daß mit ihnen nur eine begrenzte Verbesserung des Weißgrades der eingesetzten Ausgangsmineralien erzielt werden kann. Das bedeutet zum Beispiel, daß qualitativ minderwertige Mineralvorkommen derzeit nicht vollständig abgebaut werden können, da es keine Möglichkeit gibt, diese Vorkommen für eine Verwendung mit bestimmten Qualitätsansprüchen aufzubereiten. Andererseits ist das natürliche Vorkommen der in Rede stehenden Mineralien so beschaffen, daß der Anteil an einem Vorkommen, der die besten Qualitätsanforderungen erfüllt, in Bezug auf das jeweilige Gesamtvorkommen im allgemeinen am geringsten vertreten und somit am teuersten ist.

Es ist daher Aufgabe der vorliegenden Erfindung, ein Verfahren der eingangs erwähnten Art bereitzustellen, das die aus dem Stand der Technik bekannten Nachteile vermeidet und es ermöglicht, minderwertigere Mineralqualitäten so aufzubereiten, daß sie für Anwendungen mit hohen Qualitätsanforderungen geeignet sind.

Die Vorliegende Aufgabe wird erfindungsgemäß durch ein Verfahren zur Herstellung aufgehellter Mineralien mit hohem Weißgrad, insbesondere zur Herstellung von aufgehellten Schichtsilikaten und Carbonaten, gelöst, wobei das Verfahren folgende Verfahrensschritte aufweist:
1. Versetzen einer Mineralsuspension mit Natronlauge;
2. Dispergieren der vorliegenden Mischung durch starkes Durchmischen;
3. Zugabe eines Bleichmittels zu der erhaltenen Dispersion und unmittelbare Zuführung zur Vermahlung;
4. Aufmahlen der erhaltenen Mischung und anschließendes Nachdispergieren; und
5. Behandlung der Dispersion in einem Magnetscheider zur Abtrennung magnetischer Metalloxide und anderer Metallverbindungen.

Bei dem erfindungsgemäßen Verfahren wird einer alkalischen Mineraldispersion, welche bevorzugt mit einem Dispergiermittel versetzte wurde, ein reduzierendes Bleichmittel zugesetzt. Bei einer vorteilhaften Ausgestaltung des erfindungsgemäßen Verfahrens wird Natriumdithionit als reduzierendes Bleichmittel verwendet, während in einer besonders bevorzugten Ausgestaltung des Verfahrens Formamidinsulfinsäure (FAS) verwendet wird. Erfindungsgemäß schließt sich unmittelbar folgend ein Mahlvorgang an, bei dem gleichzeitig eine Bleiche des eingesetzten Minerals erfolgt. Bei diesem Mahlvorgang wird das aufzuhellende Mineral so aktiviert, daß ein gegenüber den herkömmlichen Bleichverfahren beschleunigter und wirksamerer Bleichprozeß abläuft. Diese Aktivierung beruht unter anderem auch auf der Tatsache, daß bei dem erfindungsgemäßen Bleichverfahren durch das Mahlen eine gegenüber den herkömmlichen Verfahren größere Oberfläche des eingesetzten Minerals erzielt wird. Zudem entsteht durch das Mahlen eine freie Oberfläche, die nicht bereits durch Adsorptionsvorgänge in ihrer Aktivität herabgesetzt wurde, sondern dem Angriff des Reduktionsmittels unmittelbar ausgesetzt ist.

Bei diesem Mahlvorgang erfolgt im allgemeinen eine Temperaturerhöhung um 10 bis 30°C, sofern nicht gekühlt wird. Sofern eine Kühlung erwünscht ist, kann diese auf bekannte Weise erfolgen, zum Beispiel mit einer indirekten Wasserkühlung.

Die chemisch gebleichte Mineralsuspension wird anschließend in einem Behälter gesammelt und mit einem schnell laufenden Rührwerk, bevorzugt einer Zahnscheibe, mechanisch nachdispergiert. Diese nachdispergierte Suspension wird dann in einer Hochgradientenmagnetscheidung bevorzugt bei einer Feldstärke von 0,2 bis 5 Tesla, stärker bevorzugt bei einer Feldstärke von 0,2 bis 2 Tesla, behandelt. Hierbei werden die färbenden magnetischen Metalloxide und andere magnetische Metallverbindungen aus der Suspension entfernt.

Je nach dem dabei erzielten Weißgrad kann dann noch eine Nachbleichung erfolgen. Diese erfolgt üblicherweise bei gegen Säuren weniger empfindlichen Mineralien in einem schwefelsauren Medium, wobei bevorzugt Natriumdithionit als reduzierendes Bleichmittel verwendet wird. Gemäß einer weiteren Ausgestaltung des erfindungsgemäßen Verfahrens ist es jedoch auch möglich Formamidinsulfinsäure als reduzierendes Bleichmittel zu verwenden.

Bei gegen Säuren empfindlichen Mineralien, wie den Carbonaten, erfolgt die Nachbleiche allerdings im alkalischen Bereich und unter bevorzugter Verwendung von Formamidinsulfinsäure als reduzierendes Bleichmittel.

Insgesamt wird durch das erfindungsgemäße Verfahren eine starke und unvorhergesehene Verbesserung des Weißgrades der eingesetzten Mineralien erreicht. Die Verbesserung des Weißgrades betrifft dabei den Vergleich mit den aus dem Stand der Technik bekannten Verfahren, wobei dies grundsätzlich für alle eingesetzten Mineralqualitäten zutrifft, überraschenderweise auch für hochwertige Mineralqualitäten.

Durch die Erhöhung der Aktivität der Oberflächenschichten wird ein erhöhtes Adsorptionsvermögen und eine Vergrößerung der Reaktionsgeschwindigkeit bei chemischen Reaktionen, wie zum Beispiel einem Bleichvorgang, erreicht.

Zur Unterstützung dieser Effekte wird daher das Mahlgut in einer vorteilhaften Ausgestaltung des erfindungsgemäßen Verfahrens bereits vor dem Mahlvorgang mit Natronlauge und einem Dispergiermittel, bevorzugt Polyacrylat, versetzt. und dispergiert. Hierdurch wird erreicht, daß das Mahlgut bereits als frei bewegliche Einzelpartikel dem Mahlvorgang zugeführt werden, und auch die durch den Mahlvorgang erzeugten freien Bruchflächen unmittelbar mit dem Dispersionsmittel in Kontakt kommen und somit auch mit dem Bleichmittel.

Im Ergebnis liegen die mit dem erfindungsgemäßen Verfahren erzielten Bleichergebnisse in Abhängigkeit von der gebleichten Mineralsorte zum Teil deutlich über den Bleichwerten, die mit den aus dem Stand der Technik bekannten Verfahren erzielt werden. Je nach eingesetzter Mineralsorte beträgt die gegenüber den herkömmlichen Verfahren erzielte Steigerung der Weißewerte ca. 0,5 bis 3,5 %-Punkte.

Im folgenden wird das erfindungsgemäße Verfahren anhand von Beispielen und im Vergleich zu den herkömmlichen Bleichverfahren mit Bezug auf die beigefügten Figuren näher erläutert. Es zeigen:
- Fig. 1: eine schematische Darstellung des Verfahrensablaufs einer vorteilhaften Ausgestaltung des erfindungsgemäßen Verfahrens;
- Fig. 2: eine weitere schematische Darstellung des Verfahrensablaufs des erfindungsgemäßen Verfahrens in einer vorteilhaften Ausgestaltung;
- Fig. 3: ein Diagramm, das die mit den verschiedenen Verfahren erzielten Weißgrade für die Kaolintypen C und D wiedergibt;
- Fig. 4: ein Diagramm wie in Fig. 3, jedoch für Talkum;
- Fig. 5: ein Diagramm wie in Fig. 3 und 4, jedoch für Carbonat;
- Fig. 6: ein Diagramm, in dem die mit drei ausgewählten Verfahren erzielten Weißgrade gegen die Ausgangsweißgrade des Rohmaterials aufgetragen sind.

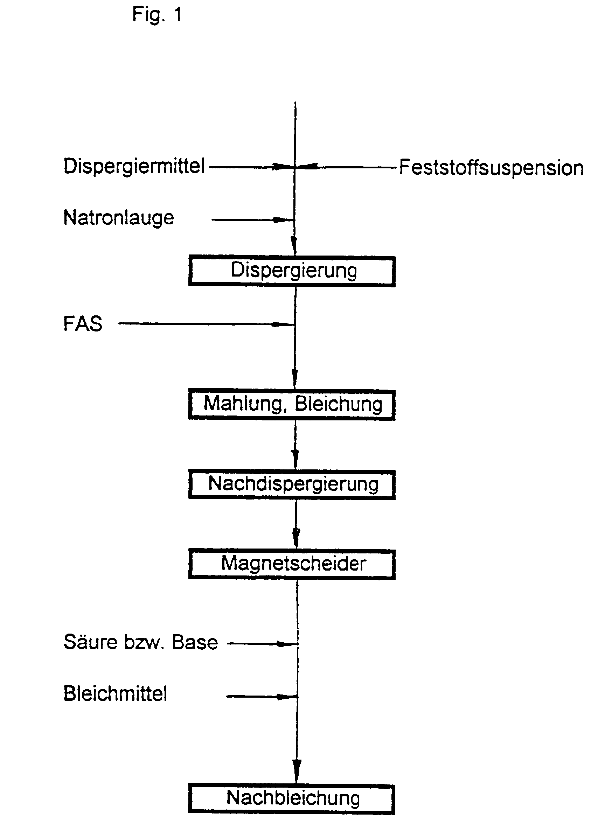

Nachfolgend wird zuerst anhand von Fig. 1 der schematische Verfahrensablauf erläutert.

Eine das zu bleichende Mineral enthaltende Feststoffsuspension wird mit einem geeigneten Rührwerk durch starkes Durchmischen dispergiert. Der pH der Feststoffsuspension wird dabei bevorzugt mit Natronlauge auf einen Wert von 8 bis 11 eingestellt. Ebenfalls bevorzugt ist es, ein geeignetes Dispergiermittel mit 0.1 bis 0.4 Massenprozent Dispergiermittel zu der Feststoffsuspension zu geben. Vorzugsweise wird dabei Polyacrylat als Dispergiermittel verwendet. Es wird bevorzugt in einer Menge von ungefähr 0.1 bis 0.3 Massen-%, bezogen auf den Feststoffgehalt der Suspension, eingesetzt.

Anschließend wird die dispergierte Feststoffsuspension in einer geeigneten Mahlvorrichtung für eine Dauer von ungefähr 5 bis 15 Minuten gemahlen. Dabei ist es bevorzugt, das Bleichmittel unmittelbar vor dem Eintritt der Suspension in den Mahlraum hinzuzufügen. Als Bleichmittel werden dabei Natriumdithionit und Formamidinsulfinsäure (FAS) verwendet, wobei Formamidinsulfinsäure stärker bevorzugt ist. Es ist weiterhin bevorzugt, daß die Konzentration des reduzierenden Bleichmittels 0,3 Massen-%, bezogen auf den Feststoffgehalt der Suspension, beträgt. Die bei der Vermahlung frei werdende Wärme wird vorzugsweise durch Kühlung abgeführt, zum Beispiel durch eine indirekte Wasserkühlung. Ohne eine derartige Kühlung käme es zu einer Temperaturerhöhung um 10 bis 30°C.

Nach dem Mahlvorgang und der gleichzeitigen reduktiven Bleiche wird die Suspension in einem Behälter mit einem schnellaufenden Rührwerk, vorzugsweise einer Zahnscheibe, gesammelt und nachdispergiert und nachfolgend einem Magnetscheider zugeführt. In dem Magnetscheider erfolgt eine Hochgradientmagnetscheidung zur Abscheidung der magnetischen Metallverbindungen, insbesondere der als natürliche Begleitverbindungen in den Mineralien enthaltenen färbenden Metalloxide. Die Magnetscheidung wird bevorzugt bei einer Feldstärke von 0,2 bis 5 Tesla durchgeführt, stärker bevorzugt bei einer Feldstärke von 0,5 bis 2 Tesla.

Abschließend wird nach der Magnetscheidung eine Nachbleichung durchgeführt, sofern dies erforderlich erscheint. Je nach eingesetztem Mineral wird der Auslauf der Feststoffsuspension aus dem Magnetscheider dabei zuerst auf einen pH-Wert im sauren oder alkalischen Bereich eingestellt. Bei weniger säureempfindlichen Mineralien, wie Silicaten, wird der pH-Wert bevorzugt auf 3,5 eingestellt, wobei vorzugsweise Schwefelsäure verwendet wird, während bei säureempfindlichen Mineralien, wie Carbonat, der pH-Wert bevorzugt auf 10 eingestellt wird, wobei vorzugsweise Natronlauge Verwendung findet. Als Bleichmittel können bei diesem Verfahrensschritt, unabhängig vom eingestellten pH-Wert, Natriumdithionit oder Formamidinsulfinsäure verwendet werden. Es ist allerdings besonders bevorzugt, bei einem pH-Wert im sauren Bereich Natriumdithionit und bei einem pH-Wert im alkalischen Formamidinsulfinsäure zu verwenden.

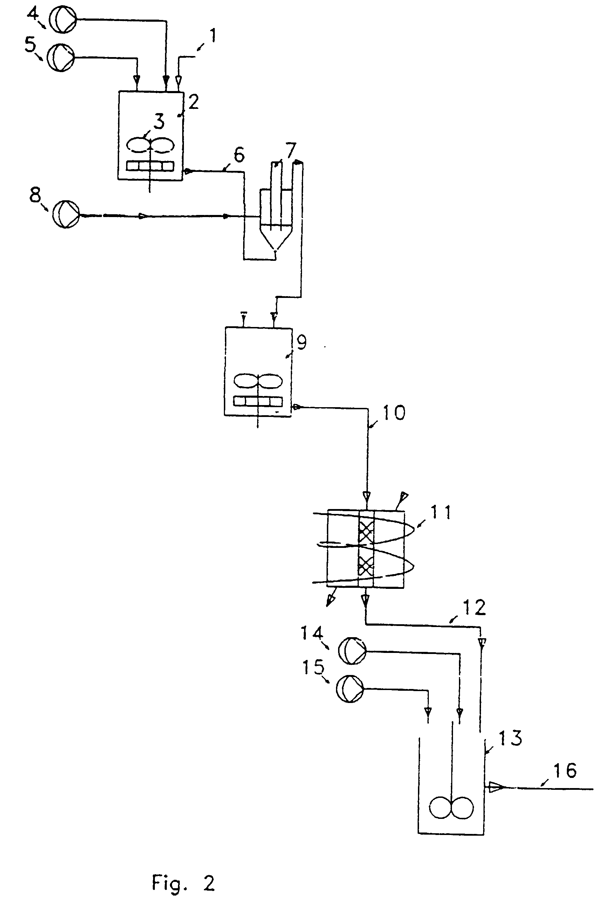

Anhand von Fig. 2 wird nun die Durchführung des erfindungsgemäßen Verfahrens in einer bevorzugten Ausgestaltung sowohl im Labor als auch im produktionsmaßstab erläutert.

Eine ungebleichte Mineralsuspension wird über eine Zuleitung 1 in einen Behälter 2 mit einem darin angeordneten Rührwerk 3 geleitet. Über Dosiereinrichtungen 4 und 5 werden nun die entsprechenden Mengen Natronlauge und Dispergiermittel hinzugegeben und die Suspension durch starkes Rühren dispergiert. Hierfür wurden, entsprechend dem jeweiligen Maßstab, entsprechend dimensionierte Rührwerke 3 eingesetzt.

Anschließend wird die dispergierte Suspension über eine Leitung 6 in ein entsprechendes Mahlwerk 7 geleitet. Im Labormaßstab handelt es sich bei dem Mahlwerk 7 um eine Technikumsmühle der Firma NETSCH (Labormühle LME 1) und im produktionsmaßstab um eine Mühle der Firma Vollrath. Bei beiden Mahlwerken 7 handelt es sich um Rührwerkskugelmühlen mit Aluminiumoxidmahlkörpern.

Durch eine Dosiereinrichtung 8 wird das Bleichmittel zu der Mineralsuspension gegeben. Obwohl die Zugabe des Bleichmittels vor dem Mahlvorgang erfolgen kann, ist es besonders bevorzugt das Bleichmittel während des Mahlens zuzugeben.

Nach 5 bis 15 Minuten wird der Mahlvorgang beendet und die gebleichte Mineralsuspension in einem entsprechend dimensionierten Behälter mit Rührwerk nachdispergiert und anschließend über die Leitung 10 dem Magnetscheider 11 zugeführt. Im Labormaßstab wird dabei ein Labormagnetscheider der Firma ERIEZ (ERIEZ L5) mit einer Durchsatzleistung von 1 bis 1,5 l/Minute, einer Magnetfeldstärke von 0,5 bis 2 Tesla und einer Suspensionsverweilzeit von 30 Sekunden verwendet. Im Produktionsmaßstab wird ein Magnetscheider der Firma CARPCO (CARPCO SMS) mit einer maximalen Magnetfeldstärke von 5 Tesla verwendet.

Über die Leitung 12 wird die Suspension in einen wiederum mit einem Rührwerk versehenen Behälter 13 geleitet, in dem eine Nachbleichung stattfindet. Hierfür werden der Suspension aus den Dosiereinrichtungen 14 und 15 entsprechend Lauge bzw. Säure zum Einstellen des pH-Werts und Bleichmittel zugegeben. Das Nachbleichen erfolgt dann unter Rühren und mit einer bevorzugten Reaktionszeit von 10 Minuten.

Über die Abflußleitung 16 wird die gebleichte Mineralsuspension dann zu einer etwaigen Weiterverarbeitung weitergeleitet oder zur Lagerung in entsprechende Tanks abgefüllt.

Bei den durchgeführten Untersuchungen wurden verschiedene Kaolinsorten aus einem Vorkommen im Hirschauer Becken sowie eine Qualität aus Brasilien eingesetzt. Weiterhin wurden jeweils eine Sorte Talkum und eine Sorte Carbonat untersucht. Die Zusammensetzungen der untersuchten Kaolinsorten sind in Tabelle 1 angegeben und die der Talk- und Carbonatsorte in Tabelle 2.

Die Messungen an den jeweiligen Mineralproben wurden auf folgende Weise durchgeführt:
1. Die zu messenden Mineralproben wurden in einer Labordrucknutsche bei 5 bar Druck entwässert und im Trockenschrank bei 110°C getrocknet.
2. Bestimmung der optischen Werte:
   Weißgrad (WG), Gelbwert (GW), Farbort (x, y), Sättigung (S) Helligkeit (H) und Farbtiefe (FT) wurden mit dem Weißgradmeßgerät ELREPHO 2000 gemessen.
3. Bestimmung der Korngröße:
   Korngrößeverteilungen wurden mit dem Sedigraph 5100 von MICROMERITICS gemessen.
4. Bestimmung der Abrasion:
   Die Abrasion wurde mit dem Abrasionstester AT 1000 von EINLEHNER ermittelt.

Die in den Tabellen 1 und 2 aufgeführten Mineralien wurden nach den aus dem Stand der Technik bekannten Verfahren sowie nach dem erfindungsgemäßen Verfahren gebleicht und die genannten Werte auf die beschriebene Weise ermittelt. In den weiteren Tabellen werden für die einzelnen Verfahren folgende Bezeichnungen benutzt:
- V0-: Rohmaterial, ungebleicht
- V1 -: reduzierende Bleiche mit Natriumdithionit
- V2 -: reduzierende Bleiche mit Formamidinsulfinsäure
- V3 -: Hochgradientmagnetscheidung
- V4 -: Hochgradientmagnetscheidung in Kombination mit Natriumhydrogensulfit-Bleiche
- V5 -: Hochgradientmagnetscheidung in Kombination mit Formamidinsulfinsäure-Bleiche
- V6 -: erfindungsgemäßes Bleichverfahren (MBDH-Bleiche)

In den Tabellen 3 und 4 sind die nach den verschiedenen Verfahren und bei den jeweils eingesetzten Mineralsorten erzielten Weißgrade (WG) und Gelbwerte (GW) aufgeführt, wobei deutlich wird, daß das erfindungsgemäße Verfahren in allen Versuchen die besten Ergebnisse liefert. Die Tabellen 5 bis 11 zeigen im einzelnen die bei der jeweiligen Mineral sorte eingehaltenen Bedingungen hinsichtlich des eingestellten pH-Werts, des Mahlvorgangs und des angelegten Magnetfelds. Wo bei den Verfahren V1 und V4 in den Tabellen 10 und 11 "nicht relevant" aufgeführt ist, bedeutet dies, daß diese Verfahren keine Bedeutung besitzen und sie deshalb nicht durchgeführt wurden.

Aus Tabelle 12 wird die vorteilhafte Wirkung der Zugabe des Dispergiermittels anhand des Beispiels der Kaolinsorte B ersichtlich. Obwohl auch schon ohne Zusatz eines Dispergiermittels im Vergleich mit den aus dem Stand der Technik bekannten Verfahren hinsichtlich des Weißgrades das beste Ergebnis erzielt wird, läßt sich dieses durch die Zugabe eines Dispergiermittels zu der Mineralsuspension noch um 1,7 %-Punkte verbessern.

Der mit dem erfindungsgemäßen Verfahrensablauf (V6) erzielbare Weißgrad ist grundsätzlich vom Grad der Aufmahlung und von der gewählten Temperatur abhängig. Für die Kaolinsorte B wurde daher der erzielte Weißgrad mit dem erfindungsgemäßen Verfahren in Abhängigkeit von dem Mahlgrad bestimmt. Die Kornfraktion des Aufgabematerials enthielt einen Anteil von 25,2 % Teilchen im Größenbereich von 0 bis 2 µm und der Weißgrad betrug 77,7. Bei einer Aufmahlung des Aufgabematerials, bei der der Anteil an der Kornfraktion mit einer Größe von 0 bis 2 µm 47,7 % betrug erhielt man mit dem erfindungsgemäßen Verfahren einen Weißegrand von 82,2, bei einer Aufmahlung bis zu einem Anteil von 54,7 % der Teilchen in der Größe von 0 bis 2 µm betrug der Weißgrad 83, bei einer Aufmahlung bis 61,7 % der Teilchen mit einer Größe von 0 bis 2 µm betrug der Weißgrad 84,1 und bei einer Aufmahlung bis 69 % der Teilchen mit einer Größe von 0 bis 2 µm betrug der Weißgrad 84,5. Hierdurch wird deutlich, daß sich die optischen Eigenschaften mit zunehmenden Mahlgrad deutlich verbessern. Die Temperatur wurde bei diesen Versuchen während des gesamten Bleichverfahrens in einem Bereich von 22 bis 25 °C gehalten.

Um den Einfluß der Temperatur zu ermitteln, wurde bei dem erfindungsgemäßen Verfahren das Material soweit aufgemahlen, daß der Anteil der Teilchen mit einer Größe von 0 bis 2 µm in der Kornfraktion 61,7 % betrug und das Bleichverfahren wurde jeweils bei Temperaturen von 20, 37 und 50°C durchgeführt. Bei einer Temperatur von 20°C betrug der erzielte Weißegrand 84,2, bei 37°C 84,7 und bei 50°C 85,2. Es ist daher festzustellen, daß sich die optischen Eigenschaften mit zunehmender Temperatur zu höheren Werten verbessern.

Da die bis jetzt angeführten Tabellen sich ausschließlich auf Laborversuche beziehen, wurde das erfindungsgemäße Verfahren bei den Kaolinsorten A und D als Beispiel für die Übertragbarkeit auch im Produktionsmaßstab durchgeführt. Die dabei eingehaltenen Bedingungen und erzielten Ergebnisse sind in den Tabellen 13 und 14 aufgeführt, wobei deutlich wird, daß gegenüber dem Laborverfahren nur minimale Verschlechterungen auftreten und das erfindungsgemäße Verfahren daher auch für andere Mineral sorten im Produktionsmaßstab mit hervorragenden Ergebnissen einsetzbar ist.

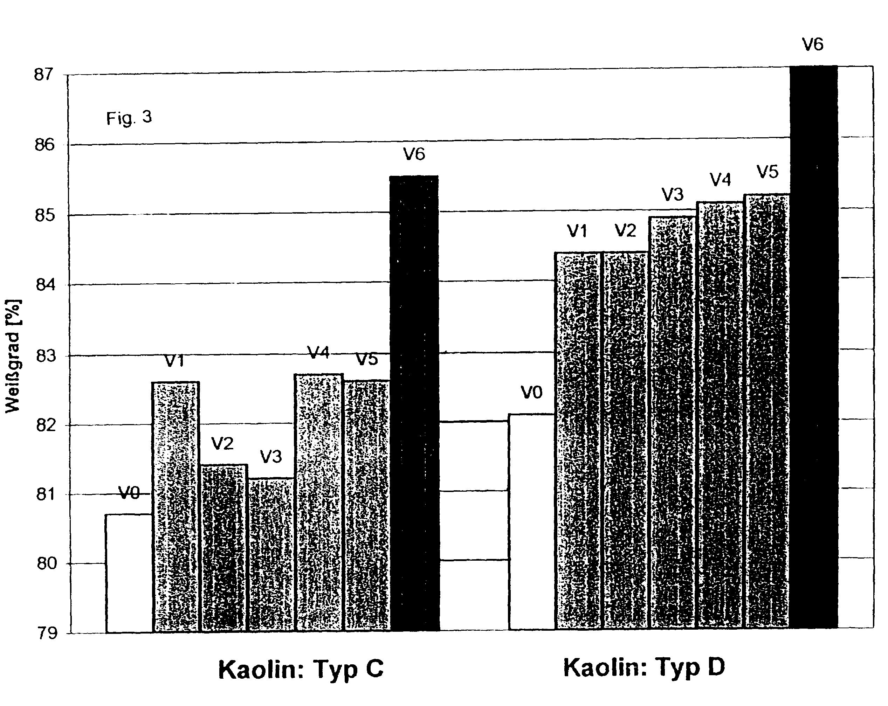

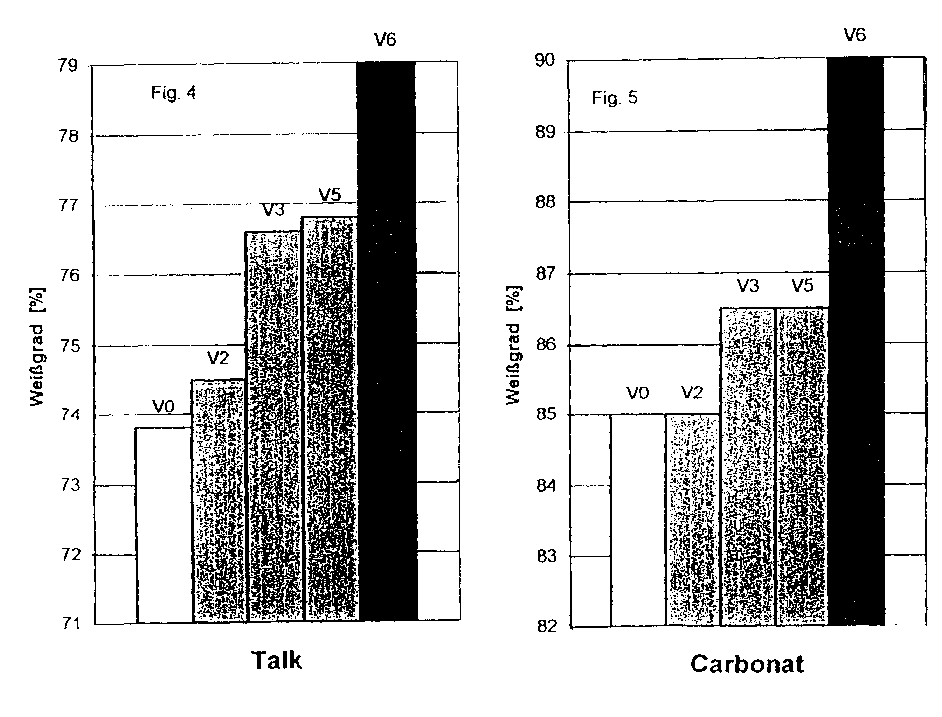

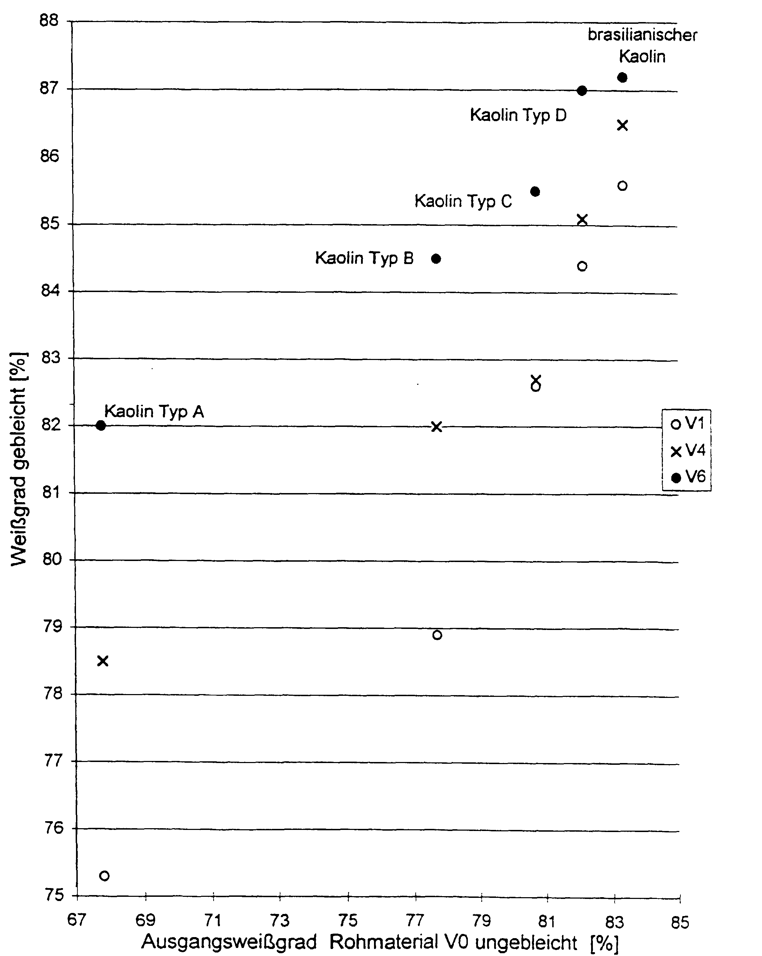

In den Fig. 3 bis 5 sind die mit den untersuchten Verfahren erhaltenen Ergebnisse zur besseren Veranschaulichung der Vorteile der vorliegenden Erfindung für vier Mineralien in der Form von Blockdiagrammen dargestellt. In Fig. 6 ist eine etwas andere Darstellung gewählt worden, die die mit drei verschiedenen Verfahren erzielte Verbesserung des Weißgrades bei den fünf untersuchten Kaolinsorten gegenüber der Ausgangsweiße des Rohmaterials angibt.

Aus diesen Figuren geht insbesondere hervor, daß die mit dem erfindungsgemäßen Verfahren gegenüber den aus dem Stand der Technik bekannten Verfahren erzielte Verbesserung des Weißgrades überraschend hoch ist. Während sich zum Beispiel bei der Kaolinsorte D die nach den unterschiedlichen herkömmlichen Verfahren erzielten Weißgrade um weniger als 1 % unterscheiden, wird mit dem erfindungsgemäßen Verfahren noch eine Verbesserung von fast 2 % gegenüber dem mit einem bekannten Verfahren erzielten höchsten Weißgrad ermöglicht. Noch deutlicher treten die Unterschiede bei dem jeweils untersuchten Talk und Carbonat hervor.

Aus Fig. 6 ist zu ersehen, daß auch bei hervorragenden Ausgangsqualitäten, wie der Kaolinsorte aus Brasilien, mit dem erfindungsgemäßen Verfahren noch erstaunliche Verbesserungen des Weißgrades erzielt werden. Diese Verbesserungen sind betragsmäßig gegenüber den bekannten Verfahren zwar nicht ganz so groß wie das bei den anderen Mineralsorten der Fall ist, es muß jedoch berücksichtigt werden, daß es sich bei der eingesetzten Kaolinqualität schon um ein Ausgangsmaterial mit von Haus aus hohem Weißgrad handelt, bei dem Verbesserungen im Weißgrad nur noch relativ gering ausfallen können. Auch bei derartig hochwertigen Mineralsorten ist es jedenfalls möglich, mit dem erfindungsgemäßen Verfahren eine deutliche Verbesserung des Weißgrades zu erzielen.

Demgemäß ist es mit dem erfindungsgemäßen Verfahren möglich, eine zusätzliche Steigerung des Weißgrades im Vergleich zu dem nach den bekannten Bleichverfahren erzielbaren höchsten Weißgrad, je nach eingesetzter Mineralsorte, von 0,5 bis 3,5 % zu erzielen. Um einen möglichst aussagekräftigen Wert bezüglich des erfindungsgemäßen Verfahrens zu erhalten, wurde auch untersucht inwiefern möglicherweise ein Abrieb der beim Mahlen verwendeten Aluminiumoxidmahlkörper einen Beitrag zur Weißgradverbesserung leistet. Der durch die Abrasion ermittelte Beitrag betrug 0,2 %-Punkte, was ein innerhalb der Fehlergrenzen der Bestimmung liegender Wert ist, so daß die Verbesserung des Weißgrades durch die Abrasion der Mahlkörper nicht beeinflußt wird und ausschließlich auf dem erfindungsgemäßen Verfahren beruht.

Zusammenfassend ist anzumerken, daß es generell mit dem erfindungsgemäßen Verfahren möglich ist, das Qualitätsniveau von Mineralien zu steigern, wodurch mindere Mineralqualitäten in Bereichen eingesetzt werden können, die zuvor nur besseren Mineralqualitäten vorbehalten waren. Es ist auch bei hochfeinen Streichkaolinen mit hohen Ausgangsweißen zur Steigerung des Weißgrades anwendbar. Das erfindungsgemäße Verfahren ist daher bei im wesentlichen gleichbleibendem Verfahrensablauf allgemein für verschiedene Mineralien, wie zum Beispiel Kaolin, Talk und Carbonat, anwendbar und hebt sich von den Bleichergebnissen deutlich von den aus dem Stand der Technik bekannten Verfahren ab.

**Tabelle 1**

| | | | | | | |
|---|---|---|---|---|---|---|
| | | | | | | |

| Herkunft | | Hirschauer Becken | | | | Brasilien |
|---|---|---|---|---|---|---|
| Kaolin : | | Typ A | Typ B | Typ C | Typ D | Brasil. Kaolin |
| Chemische Analyse | | | | | | |
| SiO2 | [MA-%] | 47,6 | 51,6 | 48,0 | 47,6 | 44,6 |
| Al2O3 | [MA-%] | 35,7 | 33,5 | 36,5 | 37,2 | 38,1 |
| Fe2O3 | [MA-%] | 0,69 | 0,30 | 0,39 | 0,27 | 1,74 |
| TiO2 | [MA-%] | 0,40 | 0,36 | 0,34 | 0,29 | 1,12 |
| K2O | [MA-%] | 2,27 | 2,37 | 1,24 | 0,56 | <0,01 |
| Na2O | [MA-%] | 0,14 | 0,11 | 0,12 | 0,06 | <0,01 |
| Glühverlust | [MA-%] | 11,8 | 11,2 | 12,3 | 13,1 | 13,9 |
| | | | | | | |

| mineralogische Analyse | | | | | | |
|---|---|---|---|---|---|---|
| Kaolinit | [MA-%] | 83 | 78 | 88 | 92 | 96 |
| Quarz | [MA-%] | 1 | 6 | 2 | 2 | 1 |
| Feldspat | [MA-%] | 13 | 15 | 8 | 4 | |
| Restmineralien | [MA-%] | 1 | 1 | 2 | 2 | 3 |
| Glimmer/Illit | [MA-%] | 2 | | | | |
| | | | | | | |

| Kornaufbau | | | | | | |
|---|---|---|---|---|---|---|
| 0-2 µm original | [MA-%] | 38,1 | 25,2 | 55,8 | 60,0 | 97,0 |
| 0-2 µm vermahlen | [MA-%] | 73,7 | 69,0 | 77,3 | 74,9 | 99,3 |
| | | | | | | |

| Abrasion | | | | | | |
|---|---|---|---|---|---|---|
| original | [mg] | >35 | >35 | 18 | 12 | 1,5 |
| vermahlen | [mg] | 20 | 15,7 | 15 | 11 | 1,5 |

**Tabelle 2**

| | | | |
|---|---|---|---|
| | | | |
| | | | |

| Sorte: | | Talk | Carbonat |
|---|---|---|---|
| Chemische Analyse | | | |
| SIO2 | [MA-%] | 43,0 | 0,59 |
| Al2O3 | [MA-%] | 2,51 | 0,23 |
| Fe2O3 | [MA-%] | 5,03 | <0,01 |
| TiO2 | [MA-%] | 0,04 | 0,01 |
| K2O | [MA-%] | <0,01 | <0,01 |
| Na2O | [MA-%] | <0,01 | <0,01 |
| CaO | | 3,56 | 55,5 |
| MgO | | 31,1 | 0,40 |
| Glühverlust | [MA-%] | 14,7 | 43,2 |
| mineralogische Analyse | | | |
| Talkum | [MA-%] | 67 | |
| Chlorit | [MA-%] | 13 | |
| Calzit | [MA-%] | 1 | 97 |
| Dolomit | [MA-%] | 10 | 2 |
| Magnesit | [MA-%] | 8 | |
| Quarz | [MA-%] | | 1 |
| Restmineralien | [MA-%] | 1 | |
| | | | |
| | | | |

| Kornaufbau | | | |
|---|---|---|---|
| 0-2 µm original | [MA-%] | 29,0 | 24,1 |
| 0-2 µm vermahlen | [MA-%] | 51,5 | 74,1 |

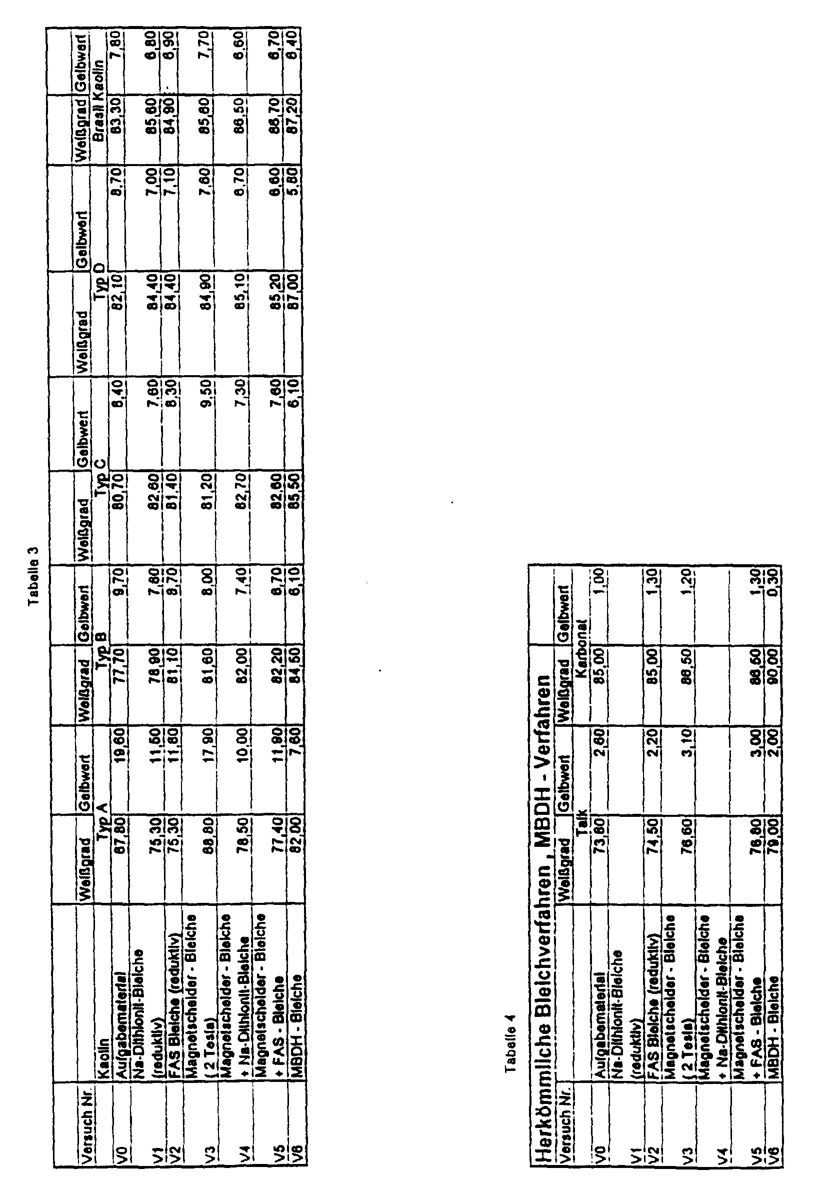

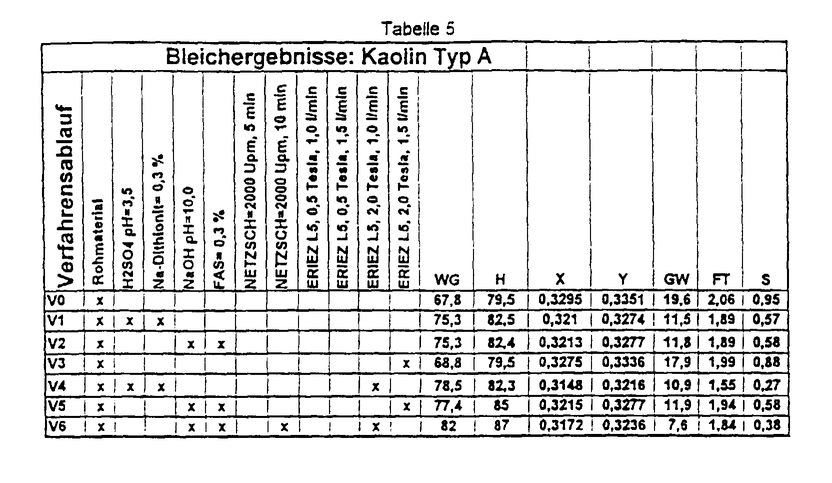

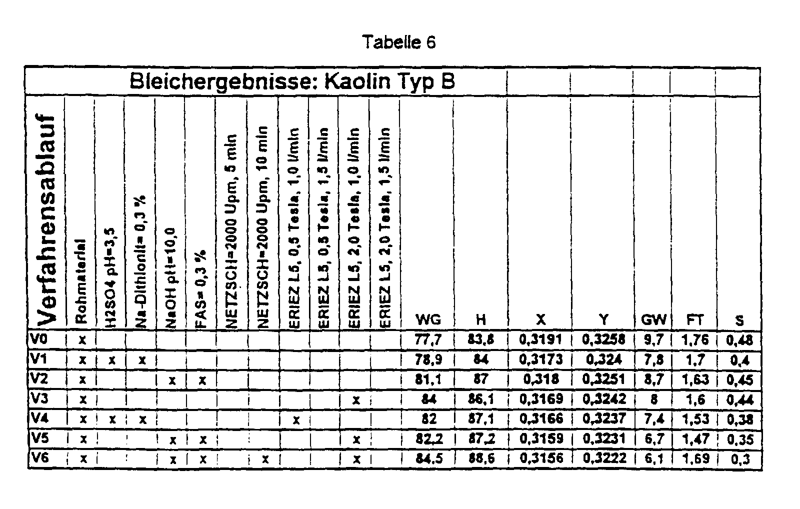

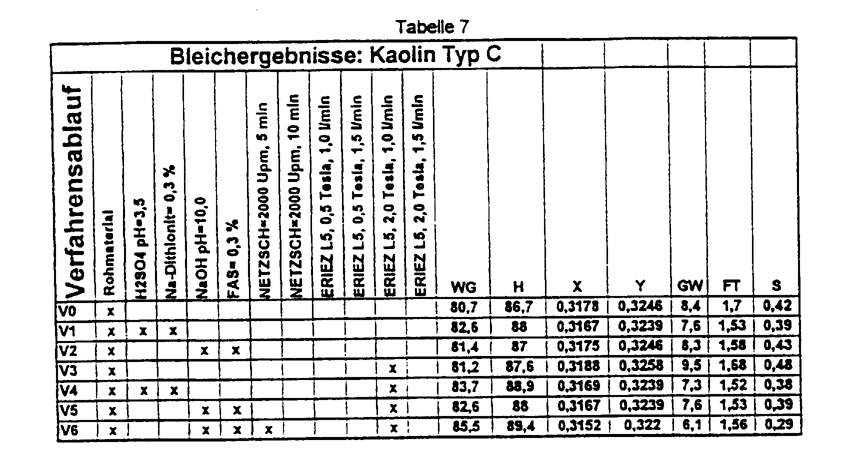

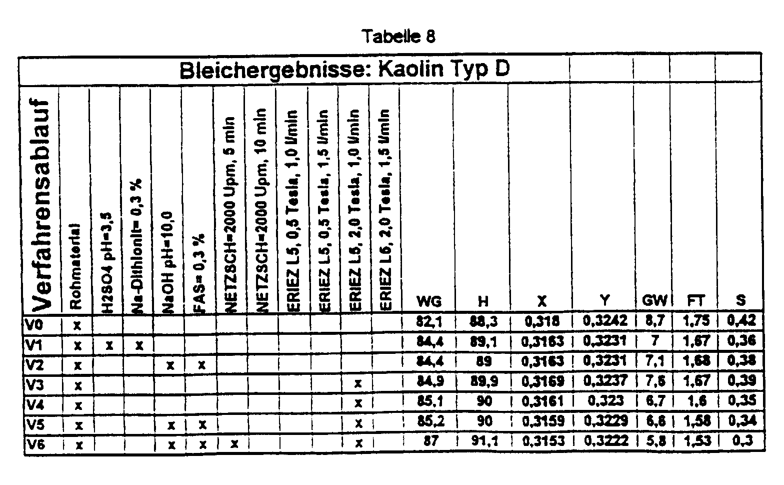

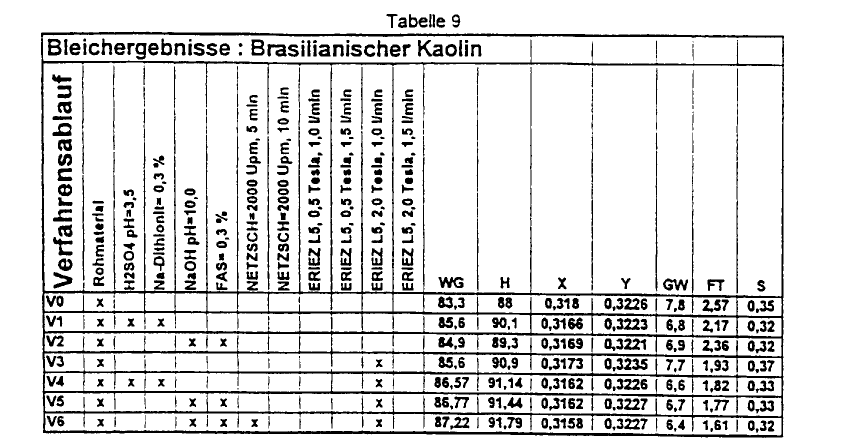

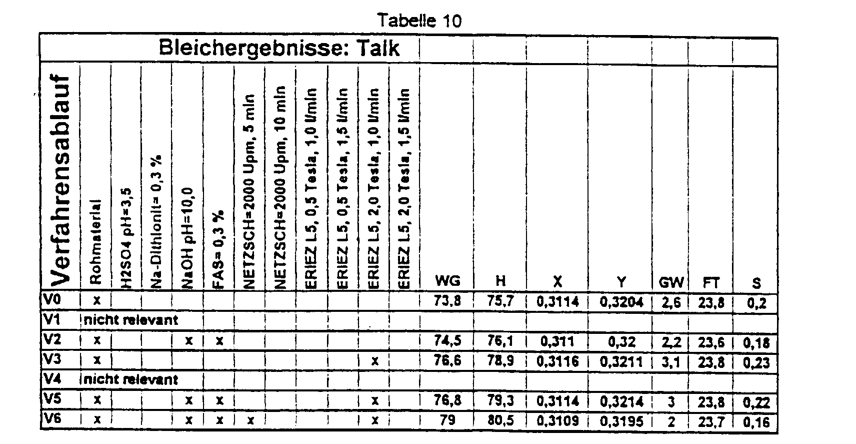

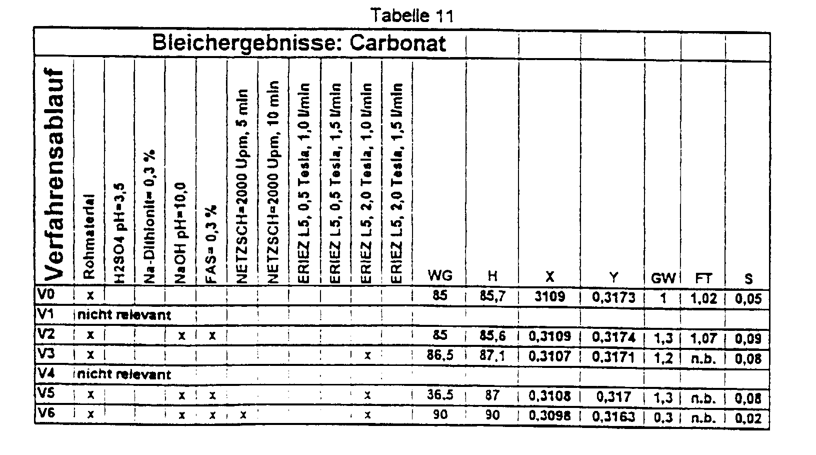

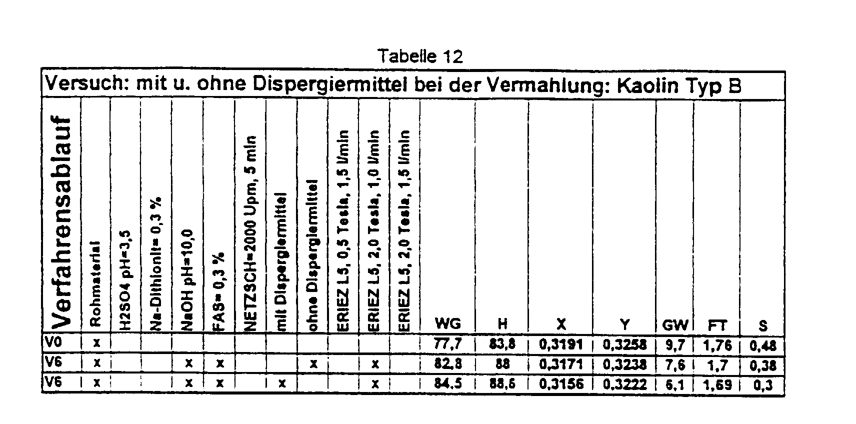

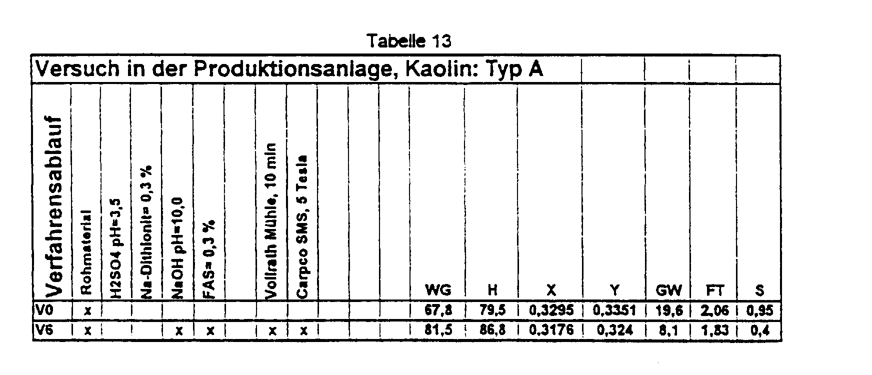

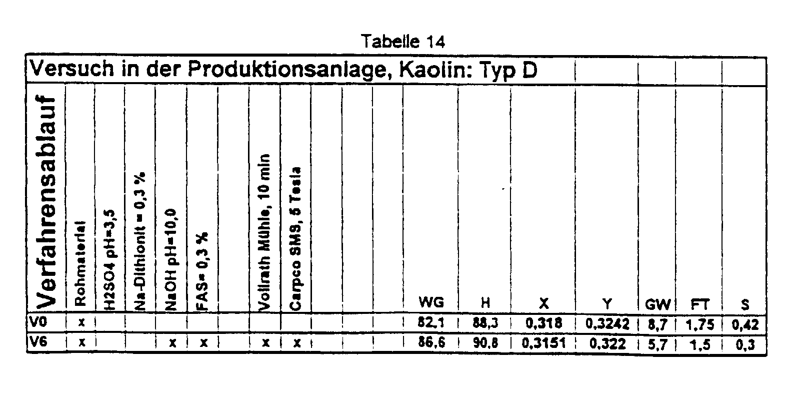

## Patentansprüche

1. Verfahren , insbesondere zur Herstellung von aufgehellten Schichtsilikaten und Carbonaten, mit folgenden Verfahrensschritten:
1. Versetzen einer Mineralsuspension mit Natronlauge;
2. Dispergieren der vorliegenden Mischung durch starkes Durchmischen;
3. Zugabe eines Bleichmittels zu der erhaltenen Dispersion;
4. Aufmahlen der erhaltenen Mischung und anschließende Nachdispergierung; und
5. Behandlung der Dispersion in einem Hochgradientmagnetscheider zur Abscheidung der magnetischen färbenden Metalloxide.

2. Verfahren gemäß Anspruch 1, wobei der Feststoffgehalt der Suspension 200 bis 800 g/l, bevorzugt 250 bis 350 g/l, beträgt.

3. Verfahren gemäß Anspruch 1 oder 2, wobei die Mineralsuspension mit Natronlauge auf einen pH von 8 bis 11 eingestellt wird.

4. Verfahren gemäß einem der Ansprüche 1 bis 3, wobei der mit Natronlauge versetzten Mineralsuspension ein Dispergiermittel zugegeben wird.

5. Verfahren gemäß Anspruch 4, wobei Polyacrylat als Dispergiermittel verwendet wird.

6. Verfahren gemäß Anspruch 5, wobei, bezogen auf den Mineralgehalt, 0,1 bis 0,4 Massen-% Dispergiermittel wie z.B. Polyacrylat zu der Mineralsuspension gegeben werden.

7. Verfahren gemäß einem der Ansprüche 1 bis 6, wobei als Bleichmittel Natriumdithionit oder Formamidinsulfinsäure (FAS) verwendet wird.

8. Verfahren gemäß einem der Ansprüche 1 bis 7, wobei das Bleichmittel in einer Menge von 0,1 bis 0,4 Massen-%, bezogen auf den Feststoffgehalt der Suspension, zugegeben wird.

9. Verfahren gemäß einem der Ansprüche 1 bis 8, wobei das Bleichmittel zeitgleich mit dem Mahlen zugegeben wird.

10. Verfahren gemäß einem der Ansprüche 1 bis 9, wobei das Aufmahlen der vorliegenden Mischung in einer Kugelmühle erfolgt.

11. Verfahren gemäß einem der Ansprüche 1 bis 10, wobei die Mahldauer 5 bis 30 Minuten beträgt.

12. Verfahren gemäß einem der Ansprüche 1 bis 11, wobei die bei der Vermahlung entsehende Wärme durch Kühlung abgeführt wird.

13. Verfahren gemäß einem der Ansprüche 1 bis 12, wobei die Nachdispergierung mit einem schnellaufenden Rührwerk, wie einer Zahnscheibe, erfolgt.

14. Verfahren gemäß einem der Ansprüche 1 bis 13, wobei die Magnetscheidung bei einer Magnetfeldstärke von 0,2 bis 5 Tesla, stärker bevorzugt bei einer Magnetfeldstärke von 0,5 bis 2 Tesla erfolgt.

15. Verfahren gemäß einem der Ansprüche 1 bis 14, wobei nach der Hochgradientmagnetscheidung eine Nachbleichung erfolgt.

16. Verfahren gemäß Anspruch 15, wobei das Nachbleichen unter Rühren und mit einer Reaktionszeit von 3 bis 30 Minuten erfolgt.

17. Verfahren gemäß einem der Ansprüche 1 bis 16, wobei nach der Magnetscheidung ein pH von 2 bis 5 eingestellt wird.

18. Verfahren gemäß Anspruch 17, wobei der pH mit Schwefelsäure eingestellt wird.

19. Verfahren gemäß einem der Ansprüche 1 bis 16, wobei nach der Magnetscheidung ein pH von 8 bis 11 eingestellt wird.

20. Verfahren gemäß Anspruch 19, wobei der pH mit Natronlauge eingestellt wird.

21. Verfahren gemäß einem der Ansprüche 15 bis 20, wobei Natriumdithionit als reduzierendes Bleichmittel zugesetzt wird.

22. Verfahren gemäß einem der Ansprüche 15 bis 20, wobei Formamidinsulfinsäure als reduzierendes Bleichmittel zugesetzt wird.

23. Verfahren gemäß Anspruch 21 oder 22, wobei das Bleichmittel in einer Menge von 0,1 bis 0,4 Massen-%, bezogen auf die eingesetzte Mineralmenge, zugesetzt wird.

24. Verfahren gemäß einem der vorhergehenden Ansprüche, wobei das Aufmahlen der Mischung derart erfolgt, daß der Anteil von Teilchen mit einer Korngröße zwischen 0 und 2 µm in der Kornfraktion 40 bis 80 % beträgt, insbesondere 60 bis 80 %.

25. Verfahren gemäß einem der vorhergehenden Ansprüche, wobei die Temperatur während des Verfahrens auf 20 bis 60°C eingestellt wird, insbesondere auf 40 bis 60°C.

## Claims

1. Process, in particular for producing brightened sheet silicates and carbonates, comprising the following process steps:
1. Addition of sodium hydroxide solution to a mineral suspension;
2. Dispersing of the mixture present by vigorous mixing;
3. Addition of a bleach to the dispersion obtained;
4. Milling of the mixture obtained and subsequent dispersing; and
5. Treatment of the dispersion in a high-gradient magnetic separator for separating off the magnetic colour-imparting metal oxides.

2. Process according to Claim 1, the solids content of the suspension being 200 to 800 g/l, preferably from 250 to 350 g/l.

3. Process according to Claim 1 or 2, the mineral suspension being adjusted with sodium hydroxide solution to a pH of from 8 to 11.

4. Process according to any of Claims 1 to 3, a dispersant being added to the mineral suspension to which sodium hydroxide solution has been added.

5. Process according to Claim 4, polyacrylate being used as the dispersant.

6. Process according to Claim 5, from 0.1 to 0.4% by mass, based on the mineral content, of a dispersant, such as, for example, polyacrylate, being added to the mineral suspension.

7. Process according to any of Claims 1 to 6, sodium dithionite or formamidine sulphinic acid (FAS) being used as the bleach.

8. Process according to any of Claims 1 to 7, the bleach being added in an amount of from 0.1 to 0.4% by mass, based on the solids content of the suspension.

9. Process according to any of Claims 1 to 8, the bleach being added during the milling.

10. Process according to any of Claims 1 to 9, the milling of the mixture present being effected in a ball mill.

11. Process according to any of Claims 1 to 10, the duration of milling being from 5 to 30 minutes.

12. Process according to any of Claims 1 to 11, the heat generated during the milling being removed by cooling.

13. Process according to any of Claims 1 to 12, the subsequent dispersing being effected with a high-speed stirrer, such as a toothed disc.

14. Process according to any of Claims 1 to 13, the magnetic separation being effected at a magnetic field strength of from 0.2 to 5 Tesla, more preferably at a magnetic field strength of from 0.5 to 2 Tesla.

15. Process according to any of Claims 1 to 14, after-bleaching being effected after the high-gradient magnetic separation.

16. Process according to Claim 15, the after-bleaching being effected with stirring and with a reaction time of from 3 to 30 minutes.

17. Process according to any of Claims 1 to 16, a pH of from 2 to 5 being established after the magnetic separation.

18. Process according to Claim 17, the pH being established with sulphuric acid.

19. Process according to any of Claims 1 to 16, a pH of from 8 to 11 being established after the magnetic separation.

20. Process according to Claim 19, the pH being established with sodium hydroxide solution.

21. Process according to any of Claims 15 to 20, sodium dithionite being added as the reducing bleach.

22. Process according to any of Claims 15 to 20, formamidine sulphinic acid being added as the reducing bleach.

23. Process according to Claim 21 or 22, the bleach being added in an amount of from 0.1 to 0.4% by mass, based on the amount of mineral used.

24. Process according to any of the preceding claims, the milling of the mixture being effected in such a way that the proportion of particles having a particle size between 0 and 2 µm in the particle fraction is from 40 to 80%, in particular from 60 to 80%.

25. Process according to any of the preceding claims, the temperature during the process being adjusted to 20 to 60°C, in particular to 40 to 60°C.

## Revendications

1. Procédé destiné en particulier à la préparation de silicates et de carbonates éclaircis en couche, comportant les étapes suivantes :
1) Mélange d'une suspension minérale avec une lessive de soude ;
2) Mise en dispersion de mélange ainsi obtenu par mélangeage intensif ;
3) Addition d'un agent de décoloration à la dispersion ainsi obtenue ;
4) Trituration du mélange et de la post-dispersion obtenue ensuite ;
5) Traitement de la dispersion dans un séparateur magnétique à gradient élevé en vue de la séparation des oxydes métalliques magnétiques colorants.

2. Procédé selon la revendication 1, dans lequel la teneur en matières solides de la suspension représente 200 à 800 g/l, et de préférence 250 à 350 g/l.

3. Procédé selon la revendication 1 ou 2, dans lequel la suspension minérale est portée à un pH de 8 à 11 au moyen de la lessive de soude.

4. Procédé selon l'une des revendications 1 à 3, dans lequel la suspension traitée par la lessive de soude est additionnée d'un agent dispersant.

5. Procédé selon la revendication 4, dans lequel on utilise un polyacrylate comme agent de dispersion.

6. Procédé selon la revendication 5, dans lequel la suspension minérale est additionnée de 0,1 à 0,4% en poids par rapport à sa teneur en minéraux d'un agent dispersant tel que p. ex. un polyacrylate.

7. Procédé selon l'une des revendications 1 à 5 dans lequel, comme agent de décoloration, on ajoute du dithionite de sodium ou de l'acide formamidine-sulfinique (FAS).

8. Procédé selon l'une des revendications 1 à 7, dans lequel l'agent de décoloration est ajouté à raison de 0,1 à 0,4% en poids par rapport à la teneur en matières solides de la suspension.

9. Procédé selon l'une des revendications 1 à 8 dans lequel l'agent de décoloration est ajouté simultanément à la trituration.

10. Procédé selon l'une des revendications 1 à 9, dans lequel la trituration du mélange obtenu est effectuée dans un broyeur à billes.

11. Procédé selon l'une des revendications 1 à 10, dans lequel la durée de la trituration représente 5 à 30 minutes.

12. Procédé selon l'une des revendications 1 à 11, dans lequel la chaleur générée par la trituration est évacuée par refroidissement.

13. Procédé selon l'une des revendications 1 à 12, dans lequel la post-dispersion est effectuée au moyen d'un dispositif d'agitation à grande vitesse, tel qu'un disque denté.

14. Procédé selon l'une des revendications 1 à 13, dans lequel la séparation magnétique est effectuée sous l'action d'un champ magnétique d'une intensité de 0,2 à 5 Tesla, et nettement de préférence de 0,5 à 2 Tesla.

15. Procédé selon l'une des revendications 1 à 14, dans lequel, après la séparation magnétique à gradient élevé, on effectue une post-décoloration.

16. Procédé selon la revendication 15, dans lequel la post-décoloration est effectuée sous agitation et pendant une durée de réaction de 3 à 30 minutes.

17. Procédé selon l'une des revendications 1 à 16 dans lequel, après la séparation magnétique, on amène le pH à 2-5.

18. Procédé selon la revendication 17, dans lequel le pH est fixé au moyen d'acide sulfurique.

19. Procédé selon l'une des revendications 1 à 16, dans lequel, après la séparation magnétique, le pH est amené à 8-11.

20. Procédé selon la revendication 19, dans lequel le pH est fixe au moyen d'une lessive de soude.

21. Procédé selon l'une des revendications 15 à 20, dans lequel du dithionite de sodium est ajouté comme agent de décoloration réducteur.

22. Procédé selon l'une des revendications 15 à 20, dans lequel de l'acide formamidine-sulfinique est ajouté comme agent de décoloration réducteur.

23. Procédé selon les revendications 21 ou 22, dans lequel l'agent de décoloration est ajouté à raison de 0,1 à 0,4% en poids par rapport à la quantité d'agents minéraux traités.

24. Procédé selon l'une des revendications précédentes, dans lequel la trituration du mélange est effectuée de manière telle que la portion de petites particules ayant une grosseur comprise entre 0 et 2 µm représente 40 à 80% de la fraction de particules, et plus particulièrement 60 à 80%.

25. Procédé selon l'une des revendications précédentes, dans lequel la température, au cours du procédé, est fixée entre 20 et 60°C, et plus particulièrement entre 40 et 60°C.
